# EUROPÄISCHE PATENTSCHRIFT

(11) **EP 2 994 644 B1**
(45) Veröffentlichungstag und Bekanntmachung des Hinweises auf die Patenterteilung: **16.08.2017**
(21) Anmeldenummer: 14720141.2
(22) Anmeldetag: 29.04.2014
(51) Int. Cl.: F04D 13/06, F04D 29/041, F04D 29/047

(54) **PUMPENANORDNUNG MIT EINER GLEITLAGERANORDNUNG**
PUMP ARRANGEMENT COMPRISING A PLAIN BEARING ARRANGEMENT
ENSEMBLE POMPE POURVU D'UN ENSEMBLE PALIER LISSE

(30) Priorität: 08.05.2013 DE 102013208460
(43) Veröffentlichungstag der Anmeldung: 16.03.2016
(73) Patentinhaber: KSB Aktiengesellschaft, 67227 Frankenthal (DE)
(72) Erfinder: DRECHSEL, Patrick, 67227 Frankenthal (DE); LAY, Markus, 91257 Pegnitz (DE)
(86) Internationale Anmeldenummer: PCT/EP2014/058669
(87) Internationale Veröffentlichungsnummer: WO 2014/180705

(56) Entgegenhaltungen:
- EP-A1- 0 771 956
- DE-U1-202009 004 160
- GB-A- 2 274 683
- US-A1- 2006 245 955

## Beschreibung

Die Erfindung betrifft eine Pumpenanordnung, insbesondere Magnetkupplungspumpenanordnung, mit einem von einem Pumpengehäuse der Pumpenanordnung gebildeten Innenraum, einem Spalttopf, der eine von ihm umschlossene Kammer hermetisch gegenüber dem vom Pumpengehäuse gebildeten Innenraum abdichtet, einer mittels einer Gleitlageranordnung gelagerten und um eine Drehachse drehbar antreibbaren Laufradwelle, einem an einem Ende der Laufradwelle angeordneten Laufrad, einer drehfest mit der Laufradwelle in Verbindung stehenden ersten Lagerhülse, einer drehfest mit der Laufradwelle in Verbindung stehenden zweiten Lagerhülse, einer über eine Radiallagerfläche mit der ersten Lagerhülse zusammenwirkenden und drehfest mit dem Pumpengehäuse oder einem an dem Pumpengehäuse befestigten Bauteil verbundenen ersten Lagerbuchse, einer über eine Radiallagerfläche mit der zweiten Lagerhülse zusammenwirkenden und drehfest mit dem Pumpengehäuse oder einem an dem Pumpengehäuse befestigten Bauteil verbundenen zweiten Lagerbuchse und einem zwischen der ersten und der zweiten Lagerhülse angeordneten Haltering.

Eine derartige Pumpenanordnung ist aus der US 2006/0245955 A1 bekannt.

Eine weitere vergleichbare Pumpe mit einer Magnetkupplung ist aus der
DE 20 2009 004 160 U1 bekannt.

Aus der EP 0 771 956 A1 ist eine Magnetkupplungspumpe mit einer Gleitlagerung bekannt, bei dem die stationären Lagerteile in einem als äußeres Gehäuse bezeichneten Lagerringträger aufgenommen werden und die um die Drehachse rotierenden Lagerteile auf der Welle positioniert werden. Die Axiallager sind dabei jeweils einem stationären Lagerteil von außen zugeordnet. Dies hat zum Nachteil, dass das Laufrad und die dem Laufrad am nächsten angeordnete Lagerbuchse relativ weit beabstandet sind und somit ein relativ großer Abstand dieser Lagerbuchse zu der am Laufrad auftretenden Radialkraft entsteht. Zudem ist der Austausch der stationären Lagerteile nur mit großem Aufwand und Spezialwerkzeug möglich.

Die Aufgabe der Erfindung besteht darin, eine gattungsgemäße Pumpenanordnung derart weiter zu entwickeln, dass die Schmierung der Axiallager weiter verbessert, die Radiallagerkräfte bei gegebenen Belastungen reduziert und die Servicefreundlichkeit erhöht wird.

Die Aufgabe der Erfindung wird dadurch gelöst, dass in dem Haltering an der der ersten Lagerbuchse zugewandten Stirnseite eine einen ersten Axiallagerring aufnehmende erste Ringnut und an der der zweiten Lagerbuchse zugewandten Stirnseite eine einen zweiten Axiallagerring aufnehmende zweite Ringnut ausgebildet ist, dass im Haltering wenigstens eine Bohrung ausgebildet ist, welche die erste Ringnut mit einer weiteren in einem zur Laufradwelle zugewandten Bereich im Haltering ausgebildeten Ringnut verbindet und/oder dass im Haltering wenigstens eine Bohrung ausgebildet ist, welche die zweite Ringnut mit der in dem zur Laufradwelle zugewandten Bereich im Haltering ausgebildeten Ringnut verbindet.

Durch die Positionierung der Axiallagerringe zwischen erster und zweiter Lagerbuchse sowie das Ausbilden wenigstens einer Bohrung im Haltering, welche die erste Ringnut mit einer weiteren in einem zur Laufradwelle zugewandten Bereich im Haltering augebildeten Ringnut verbindet und/oder das Ausbilden wenigstens einer Bohrung im Haltering, welche die zweite Ringnut mit der in dem zur Laufradwelle zugewandten Bereich im Haltering ausgebildeten Ringnut verbindet, wird die Schmierung und Kühlung der somit gebildeten Axiallageranordnungen im Vergleich zum Stand der Technik optimiert.

Gleichsam befinden sich die beiden Axiallageranordnungen somit an einer Position mit der geringsten Wellendurchbiegung, wodurch die Axiallagerschiefstellung im Vergleich zum Stand der Technik reduziert und der Traganteil erhöht wird.

In vorteilhafter Ausgestaltung sind die erste Lagerhülse und die erste Lagerbuchse in einer Öffnung des Gehäusedeckels angeordnet.

Dadurch ist es möglich, erste Lagerhülse und erste Lagebuchse näher am Laufrad zu positionieren, wodurch die Radialkräfte im Lager reduziert werden können und eine geringere Lagerausfallwahrscheinlichkeit in radialschubkritischen Betriebspunkten realisiert wird.

Um einen sicheren Sitz der Axiallagerringe zu erreichen, ist bei einer bevorzugten Ausgestaltung der Erfindung der erste Axiallagerring mittels einer Wellfeder in der ersten Ringnut verspannt und der zweite Axiallagerring mittels einer Wellfeder in der zweiten Ringnut verspannt.

Im Sinne einer einfachen und kostengünstigen Montage, weist bei einer vorteilhaften Weiterbildung der Erfindung eine Öffnung in einem Gehäusedeckel des Pumpengehäuses einen Öffnungsbereich mit vergrößertem Durchmesser auf, in dem eine einen Toleranzring aufnehmende umlaufende Nut ausgebildet ist und in dem die erste Lagerbuchse platziert und mittels des Toleranzringes drehfest mit dem Gehäusedeckel verbunden ist..

Des Weiteren weist zweckmäßigerweise eine Öffnung im Lagerringträger einen Öffnungsbereich mit vergrößertem Durchmesser auf, in dem eine einen Toleranzring aufnehmende umlaufende Nut ausgebildet ist und in dem die zweite Lagerbuchse platziert und mittels des Toleranzringes drehfest mit dem Lagerringträger verbunden ist.

Eine Anordnung der ersten Lagerbuchse im Gehäusedeckel und der zweiten Lagerbuchse im Lagerringträger hat zum Vorteil, dass die Gleitlagerung oder Teile davon servicefreundlich ohne Spezialwerkzeug ausgetauscht werden können.

Ausführungsbeispiele der Erfindung sind in der Zeichnung dargestellt und werden im Folgenden näher beschrieben. Es zeigt die
- Fig. 1: den Längsschnitt durch eine Magnetkupplungspumpenanordnung mit einer erfindungsgemäßen Gleitlageranordnung und die
- Fig. 2: eine der Fig. 1 entsprechende Gleitlageranordnung in vergrößerter Darstellung.

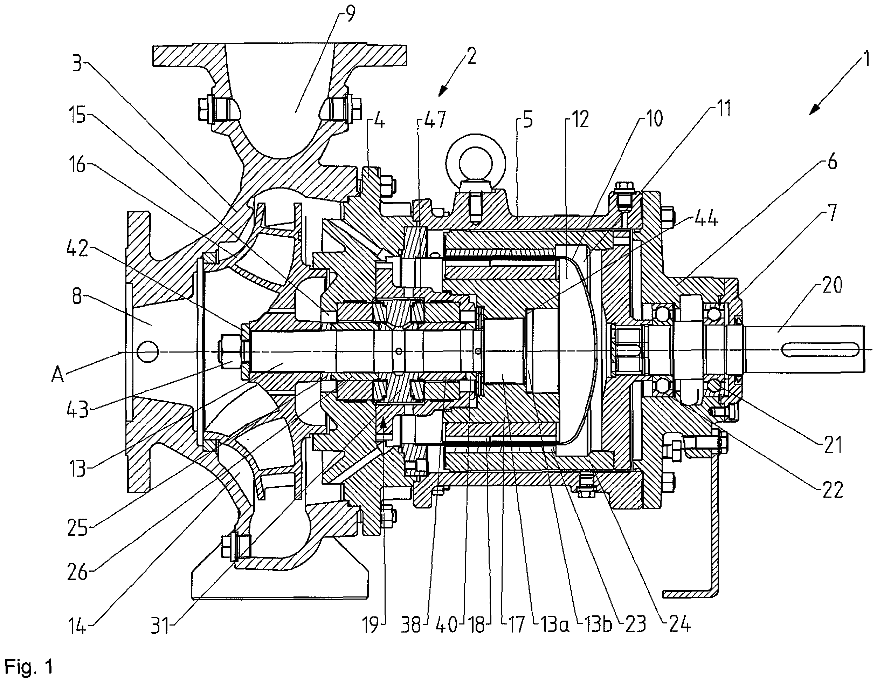

Die Fig. 1 zeigt eine Pumpenanordnung 1 in Form einer Magnetkupplungspumpenanordnung. Die Pumpenanordnung 1 weist ein mehrteiliges Pumpengehäuse 2 einer Kreiselpumpe auf, das ein als Spiralgehäuse ausgebildetes Hydraulikgehäuse 3, einen Gehäusedeckel 4, eine Lagerträgerlaterne 5, einen Lagerträger 6 und einen Lagerdeckel 7 umfasst.

Das Hydraulikgehäuse 3 weist eine Einlassöffnung 8 zum Ansaugen eines Fördermediums und eine Auslassöffnung 9 zum Ausstoßen des Fördermediums auf. Der Gehäusedeckel 4 ist an der der Einlassöffnung 8 gegenüberliegenden Seite des Hydraulikgehäuses 3 angeordnet. An der dem Hydraulikgehäuse 3 abgewandten Seite des Gehäusedeckels 4 ist die Lagerträgerlaterne 5 befestigt. Der Lagerträger 6 ist an der dem Gehäusedeckel 4 gegenüberliegenden Seite der Lagerträgerlaterne 5 angebracht. Der Lagerdeckel 7 ist wiederum an der der Lagerträgerlaterne 5 abgewandten Seite des Lagerträgers 6 befestigt.

Ein Spalttopf 10 ist an der dem Hydraulikgehäuse 3 abgewandten Seite des Gehäusedeckels 4 befestigt und erstreckt sich zumindest teilweise durch einen vom Pumpengehäuse 2, insbesondere vom Gehäusedeckel 4, von der Lagerträgerlaterne 5 und von dem Lagerträger 6 begrenzten Innenraum 11. Der Spalttopf 10 dichtet eine von ihm umschlossene Kammer 12 hermetisch gegenüber dem Innenraum 11 ab.

Eine um eine Drehachse A drehbare Laufradwelle 13 erstreckt sich von einer mittels des Hydraulikgehäuses 3 und des Gehäusedeckels 4 begrenzten Strömungskammer 14 durch eine in dem Gehäusedeckel 4 vorgesehene Öffnung 15 in die Kammer 12.

An einem innerhalb der Strömungskammer 14 liegenden Wellenende der Laufradwelle 13 ist ein Laufrad 16 befestigt, am gegenüberliegenden Wellenende, das zwei Wellenabschnitte 13a, 13b mit sich jeweils vergrößernden Durchmessern aufweist, ist ein innerhalb der Kammer 12 angeordneter Innenrotor 17 angeordnet. Der Innenrotor 17 ist mit mehreren Magneten 18 bestückt, die an der dem Spalttopf 10 zugewandten Seite des Innenrotors 17 angeordnet sind.

Zwischen Laufrad 16 und Innenrotor 17 ist eine mit der um die Drehachse A drehbar antreibbaren Laufradwelle 13 in Wirkverbindung stehende Gleitlageranordnung 19 angeordnet.

Ein nicht dargestellter Antriebsmotor, vorzugsweise ein Elektromotor, treibt eine Antriebswelle 20 an. Die um die Drehachse A antreibbare Antriebswelle 20 ist im Wesentlichen koaxial mit der Laufradwelle 13 angeordnet. Die Antriebswelle 20 erstreckt sich durch den Lagerdeckel 7 sowie den Lagerträger 6 und ist in zwei in dem Lagerträger 6 untergebrachten Kugellagern 21, 22 gelagert. Am freien Ende der Antriebswelle 20 ist ein mehrere Magnete 23 tragender Außenrotor 24 angeordnet. Die Magnete 23 sind an der dem Spalttopf 10 zugewandten Seite des Außenrotors 24 angeordnet. Der Außenrotor 24 erstreckt sich zumindest teilweise über den Spalttopf 10 und wirkt mit dem Innenrotor 17 zusammen, derart, dass der rotierende Außenrotor 24 mittels magnetischer Kräfte den Innenrotor 17 und somit die Laufradwelle 13 und das Laufrad 16 ebenfalls in eine Rotationsbewegung versetzt.

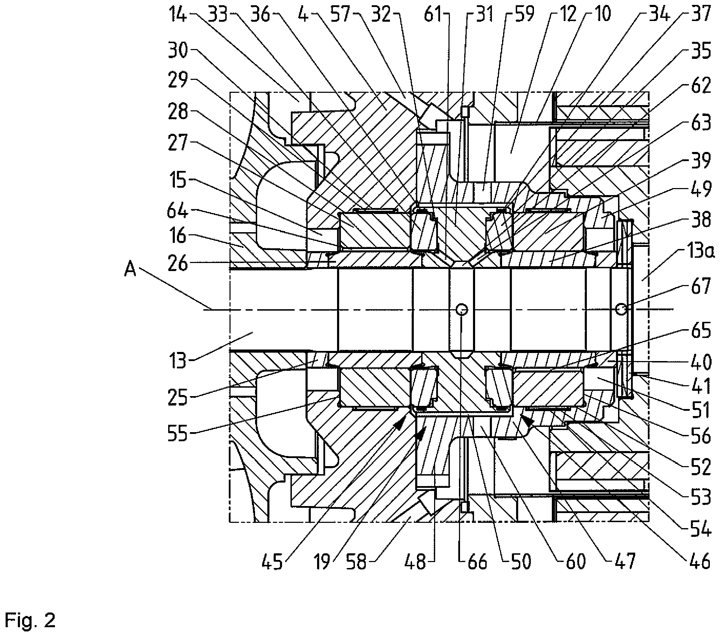

Die in der Fig. 2 vergrößert dargestellte Gleitlageranordnung 19 umfasst einen ersten Haltering 25, der auf der Laufradwelle 13 angeordnet ist und mit einer Seite am Laufrad 16 anliegt. An der dem Laufrad 16 entgegengesetzten Seite des Halterings 25 liegt eine ebenfalls auf die Laufradwelle 13 geschobene erste Lagerhülse 26 an. Die erste Lagerhülse 26 ist von einer ersten Lagerbuchse 27 umgeben, die drehfest mit dem Gehäusedeckel 4 verbunden ist. Die dem Laufrad 13 nahe erste Lagerhülse 26 und die dem Laufrad 13 nahe erste Lagerbuchse 27 sind dabei vollständig, mindestens zu einem Teil bzw. größtenteils in der Öffnung 15 des Gehäusedeckels 4 angeordnet. Die Öffnung 15 des Gehäusedeckels 4 weist einen Öffnungsbereich 28 mit vergrößertem Durchmesser auf, in dem eine einen Toleranzring 29 aufnehmende umlaufende Nut 30 ausgebildet ist, wobei die im Öffnungsbereich 28 platzierte Lagerbuchse 27 mittels des Toleranzringes 29 auf sichere Weise drehfest mit dem Gehäusedeckel 4 verbunden ist.

Ein auf die Laufradwelle 13 aufgeschobener zweiter Haltering 31 liegt an der dem Haltering 25 gegenüberliegenden Seite der Lagerhülse 26 an. In dem Haltering 31 ist eine zur ersten Lagerbuchse 27 weisende erste Ringnut 32 ausgebildet, in der ein erster Axiallagerring 33 angeordnet ist. Erste Lagerbuchse 27 und erster Axiallagerring 33 sind derart angeordnet, dass sie im Wesentlichen einander gegenüberliegen. Der Haltering 31 weist auf der der ersten Ringnut 32 gegenüberliegenden Seite eine zweite Ringnut 34 auf, in der ein zweiter Axiallagerring 35 untergebracht ist. Bei der gezeigten Ausführungsform ist der Haltering 31 einteilig ausgeführt. Bei einer alternativen Ausführungsform kann der Haltering 31 zweiteilig ausgeführt sein, wobei beide Halteringteile jeweils nur eine Ringnut 32 bzw. 34 aufweisen. Der erste Axiallagerring 33 wird mittels einer Wellfeder 36 in der ersten Ringnut 32 verspannt. Auf die gleiche Weise wird der zweite Axiallagerring 35 mittels einer weiteren Wellfeder 37 in der zweiten Ringnut 34 verspannt.

Eine auf der Laufradwelle 13 angeordnete zweite Lagerhülse 38 liegt an der der ersten Lagerhülse 26 gegenüberliegenden Seite des Halterings 31 an und ist von einer zweiten Lagerbuchse 39 umgeben. Zweite Lagerbuchse 39 und zweiter Axiallagerring 35 sind derart angeordnet, dass sie im Wesentlichen einander gegenüberliegen. Ein auf die Laufradwelle 13 geschobener dritter Haltering 40 liegt an der dem Haltering 31 abgewandten Seite an der zweiten Lagerhülse 38 an.

Wie aus den Fig. 1 und 2 ersichtlich, ist das Tellerfederpaket 41 zwischen dem Haltering 40 und dem Wellenabschnitt 13a angeordnet und beaufschlagt den Spannverbund, bestehend aus Laufrad 16, einer das Laufrad 16 über eine Scheibe 42 an die Laufradwelle 13 befestigenden Laufradmutter 43, Haltering 25, erste Lagerhülse 26, Haltering 31, zweite Lagerhülse 38, Haltering 40 und Innenrotor 17 mit einer Federkraft, derart, dass der Spannverbund, insbesondere über den Innenrotor 17 in einem gewissen Maße elastisch in Anlage an einer Anlagefläche 44 gehalten wird, die durch die unterschiedlichen Durchmesser der Wellenabschnitte 13a und 13b entsteht, wobei der Durchmesser des Wellenabschnitts 13b größer ist als der Durchmesser des Wellenabschnitts 13a und der Durchmesser des Wellenabschnitts 13a größer ist als der Durchmesser des Teils der Laufradwelle 13, der sich an der dem Wellenabschnitt 13b abgewandten Seite an den Wellenabschnitt 13a anschließt. Der Spannverbund umfasst im Wesentlichen die sich mit der Laufradwelle 13 um die Drehachse A drehenden Bauteile.

Durch unterschiedlich wirkende Axialschubkräfte während des Betriebs der Pumpenanordnung 1 gelangt entweder der erste Axiallagerring 33 in Anlage an die erste Lagerbuchse 27, wobei erster Axiallagerring 33 und erste Lagerbuchse 27 eine erste Axiallageranordnung 45 bilden, oder der zweite Axiallagerring 35 in Anlage an die zweite Lagerbuchse 39, wobei zweiter Axiallagerring 35 und zweite Lagerbuchse 39 eine zweite Axiallageranordnung 46 bilden.

Ein Lagerringträger 47 ist koaxial zur Drehachse A mittels einer nicht dargestellten Schraubverbindung mit einem flanschartigen Bereich 48 an dem Gehäusedeckel 4 befestigt und erstreckt sich in die Kammer 12. Er umgibt dabei im Wesentlichen den Haltering 31 mit den Axiallagerringen 33, 35, die zweite Lagerhülse 38, die zweite Lagerbuchse 39 und zumindest teilweise den Haltering 40. Vom flanschartigen Bereich 48 bis zu seinem freien Ende 49 reduziert sich abschnittsweise der Außendurchmesser des Lagerringträgers 47. Der Lagerringträger 47 weist einen Innenbereich 50 auf, innerhalb dessen der Haltering 31 angeordnet ist. Am freien Ende 49 weist der Lagerringträger 47 eine von der Laufradwelle 13 durchdrungene Öffnung 51 auf, die einen zum Innenbereich 50 benachbarten Öffnungsbereich 52 mit vergrößertem Durchmesser aufweist, in dem eine einen Toleranzring 53 aufnehmende umlaufende Nut 54 ausgebildet ist. Die im Öffnungsbereich 52 untergebrachte zweite Lagerbuchse 39 ist mittels des Toleranzringes 53 auf sichere Weise drehfest mit dem Lagerringträger 47 verbunden.

Durch den Übergang von der Öffnung 15 zum Öffnungsbereich 28 mit vergrößertem Durchmesser wird eine Anlagefläche 55 und durch den Übergang von der Öffnung 51 zum Öffnungsbereich 52 mit vergrößertem Durchmesser eine Anlagefläche 56 geschaffen, welche die Gleitlageranordnung 19 an ihrer vorgesehenen Position hält.

In dem Gehäusedeckel 4 sind Durchgangsöffnungen 57, 58 und im Lagerringträger 47 Durchgangsöffnungen 59, 60 vorgesehen. Die Durchgangsöffnungen 57, 58 verbinden die Strömungskammer 14 mit der im Wesentlichen vom Spalttopf 10 und dem Gehäusedeckel 4 umschlossenen Kammer 12 und die Durchgangsöffnungen 59, 60 verbinden die Kammer 12 mit dem Innenbereich 50 des Lagerringträgers 47. Im Haltering 31 ist wenigstens eine Bohrung 61 ausgebildet, welche die erste Ringnut 32 mit einer weiteren Ringnut 62, die in einem zur Laufradwelle 13 zugewandten Bereich im Haltering 31 ausgebildet ist, verbindet. Wenigstens eine Bohrung 63 verbindet die zweite Ringnut 34 ebenfalls mit der Ringnut 62. Zusätzlich befindet sich wenigstens eine parallel zur Drehachse verlaufende Axialnut 64 in der ersten Lagerbuchse 27 an der mit der ersten Lagerhülse 26 zusammenwirkenden Radiallagerfläche und eine Axialnut 65 in der zweiten Lagerbuchse 39 an der mit der zweiten Lagerhülse 38 zusammenwirkenden Radiallagerfläche.

Somit kann zur Kühlung und Schmierung der Gleitlageranordnung 19 aus der Strömungskammer 14 Fördermedium entnommen und über die Durchgangsöffnungen 57, 58, 59, 60 den Axiallagerringen 33, 35 und den einander zugeordneten Flächen der Lagerhülsen 26, 38 und Lagerbuchsen 27, 39 zugeführt werden. Über die Bohrungen 61, 63 wird das Fördermedium in die Ringnut 62 gefördert. Über wenigstens eine in der Laufradwelle 13 ausgebildete Radialbohrung 66 wird das Fördermedium in einen nicht dargestellten, sich von einem zum anderen Ende durch die gesamte Laufradwelle 13 erstreckenden Axialkanal und dann zurück in die Strömungskammer 14 gefördert. Bei Bedarf ist wenigstens eine weitere Radialbohrung 67 in der Laufradwelle nahe des Halterings 40 bzw. Tellerfederpakets 41 ausgebildet, die ebenfalls mit dem sich durch die Laufradwelle 13 erstreckenden Axialkanal in Verbindung steht. Über wenigstens eine, jedoch in den Figuren nicht dargestellte Radialbohrung im Haltering 40 wird das Fördermedium vom Innenbereich 50 des Lagerringträgers 48 zur wenigstens einen Radialbohrung 67 gefördert. Dadurch, dass die Radialbohrungen 66, 67 relativ weit von dem Laufrad 16 weg angeordnet sind, wird eine höhere Dauerfestigkeit der Laufradwelle 13 erreicht.

**Bezugszeichenliste**

| | | | |
|---|---|---|---|
| 1 | Pumpenanordnung | 27 | erste Lagerbuchse |
| 2 | Pumpengehäuse | 28 | Öffnungsbereich |
| 3 | Hydraulikgehäuse | 29 | Toleranzring |
| 4 | Gehäusedeckel | 30 | Nut |
| 5 | Lagerträgerlaterne | 31 | Haltering |
| 6 | Lagerträger | 32 | erste Ringnut |
| 7 | Lagerdeckel | 33 | erster Axiallagerring |
| 8 | Einlassöffnung | 34 | zweite Ringnut |
| 9 | Auslassöffnung | 35 | zweiter Axiallagerring |
| 10 | Spalttopf | 36 | Wellfeder |
| 11 | Innenraum | 37 | Wellfeder |
| 12 | Kammer | 38 | zweite Lagerhülse |
| 13 | Laufradwelle | 39 | zweite Lagerbuchse |
| 13a | Wellenabschnitt | 40 | Haltering |
| 13b | Wellenabschnitt | 41 | Tellerfederpaket |
| 14 | Strömungskammer | 42 | Scheibe |
| 15 | Öffnung | 43 | Laufradmutter |
| 16 | Laufrad | 44 | Anlagefläche |
| 17 | Innenrotor | 45 | erstes Axiallager |
| 18 | Magnet | 46 | zweites Axiallager |
| 19 | Gleitlageranordnung | 47 | Lagerringträger |
| 20 | Antriebswelle Bereich | 48 | flanschartiger |
| 21 | Kugellager | 49 | freies Ende |
| 22 | Kugellager | 50 | Innenbereich |
| 23 | Magnet | 51 | Öffnung |
| 24 | Außenrotor | 52 | Öffnungsbereich |
| 25 | Haltering | 53 | Toleranzring |
| 26 | erste Lagerhülse | 54 | Nut |
| 55 | Anlagefläche | | |
| 56 | Anlagefläche | | |
| 57 | Durchgangsöffnung | | |
| 58 | Durchgangsöffnung | | |
| 59 | Durchgangsöffnung | | |
| 60 | Durchgangsöffnung | | |
| 61 | Bohrung | | |
| 62 | Ringnut | | |
| 63 | Bohrung | | |
| 64 | Axialnut | | |
| 65 | Axialnut | | |
| 66 | Radialbohrung | | |
| 67 | Radialbohrung | | |
| | | | |
| A | Drehachse | | |

## Patentansprüche

1. Pumpenanordnung, insbesondere Magnetkupplungspumpenanordnung, mit einem von einem Pumpengehäuse (2) der Pumpenanordnung (1) gebildeten Innenraum (11), einem Spalttopf (10), der eine von ihm umschlossene Kammer (12) hermetisch gegenüber dem vom Pumpengehäuse (2) gebildeten Innenraum (11) abdichtet, einer mittels einer Gleitlageranordnung (19) gelagerten und um eine Drehachse (A) drehbar antreibbaren Laufradwelle (13), einem an einem Ende der Laufradwelle (13) angeordneten Laufrad (16), einer drehfest mit der Laufradwelle (13) in Verbindung stehenden ersten Lagerhülse (26), einer drehfest mit der Laufradwelle (13) in Verbindung stehenden zweiten Lagerhülse (38), einer über eine Radiallagerfläche mit der ersten Lagerhülse (26) zusammenwirkenden und drehfest mit dem Pumpengehäuse (2) oder einem an dem Pumpengehäuse (2) befestigten Bauteil (41) verbundenen ersten Lagerbuchse (27), einer über eine Radiallagerfläche mit der zweiten Lagerhülse (38) zusammenwirkenden und drehfest mit dem Pumpengehäuse (2) oder einem an dem Pumpengehäuse (2) befestigten Bauteil (41) verbundenen zweiten Lagerbuchse (39) und einem zwischen der ersten und der zweiten Lagerhülse (38) angeordneten Haltering (31),
**dadurch gekennzeichnet, dass**
in dem Haltering (31) an der der ersten Lagerbuchse (27) zugewandten Stirnseite eine einen ersten Axiallagerring (33) aufnehmende erste Ringnut (32) und an der der zweiten Lagerbuchse (39) zugewandten Stirnseite eine einen zweiten Axiallagerring (35) aufnehmende zweite Ringnut (34) ausgebildet ist,
dass im Haltering (31) wenigstens eine Bohrung (61) ausgebildet ist, welche die erste Ringnut (32) mit einer weiteren in einem zur Laufradwelle (13) zugewandten Bereich im Haltering (31) ausgebildeten Ringnut (62) verbindet und/oder dass im Haltering (31) wenigstens eine Bohrung (63) ausgebildet ist, welche die zweite Ringnut (34) mit der in dem zur Laufradwelle (13) zugewandten Bereich im Haltering (31) ausgebildeten Ringnut (62) verbindet.

2. Pumpenanordnung nach Anspruch 1, **dadurch gekennzeichnet, dass** die erste Lagerhülse (26) und die erste Lagerbuchse (27) in einer Öffnung (15) des Gehäusedeckels (4) angeordnet sind.

3. Pumpenanordnung nach Anspruch 1 oder 2, **dadurch gekennzeichnet, dass** der erste Axiallagerring (33) mittels einer Wellfeder (36) in der ersten Ringnut (32) verspannt und der zweite Axiallagerring (35) mittels einer Wellfeder (37) in der zweiten Ringnut (34) verspannt ist.

4. Pumpenanordnung nach einem der Ansprüche 2 oder 3, **dadurch gekennzeichnet, dass** die Öffnung (15) in einem Gehäusedeckel (4) des Pumpengehäuses (2) einen Öffnungsbereich (28) mit vergrößertem Durchmesser aufweist, in dem eine einen Toleranzring (29) aufnehmende umlaufende Nut (30) ausgebildet ist und in dem die erste Lagerbuchse (27) platziert und mittels des Toleranzringes (29) drehfest mit dem Gehäusedeckel (4) verbunden ist.

5. Pumpenanordnung nach einem der Ansprüche 1 bis 4, **dadurch gekennzeichnet, dass** eine Öffnung (51) in einem Lagerringträger (47) einen Öffnungsbereich (52) mit vergrößertem Durchmesser aufweist, in dem eine einen Toleranzring (53) aufnehmende umlaufende Nut (54) ausgebildet ist und in dem die zweite Lagerbuchse (39) untergebracht und mittels des Toleranzringes (53) drehfest mit dem Lagerringträger (47) verbunden ist.

## Claims

1. Pump arrangement, in particular magnetic clutch pump arrangement, having an interior space (11) formed by a pump casing (2) of the pump arrangement (1), having a containment can (10) which hermetically seals off a chamber (12) surrounded by said containment can with respect to the interior space (11) formed by the pump casing (2), having an impeller shaft (13) which is mounted by way of a plain bearing arrangement (19) and which can be driven in rotation about an axis of rotation (A), having an impeller (16) arranged on one end of the impeller shaft (13), having a first bearing sleeve (26) connected rotationally conjointly to the impeller shaft (13), having a second bearing sleeve (38) connected rotationally conjointly to the impeller shaft (13), having a first bearing bushing (27) which interacts by way of a radial bearing surface with the first bearing sleeve (26) and which is connected rotationally conjointly to the pump casing (2) or to a component (41) fastened to the pump casing (2), having a second bearing bushing (39) which interacts by way of a radial bearing surface with the second bearing sleeve (38) and which is connected rotationally conjointly to the pump casing (2) or to a component (41) fastened to the pump casing (2), and having a retaining ring (31) arranged between the first and second bearing bushings (38),
**characterized in that**
a first ring groove (32), which receives a first axial bearing ring (33), is formed in the retaining ring (31) on the face side facing toward the first bearing bushing (27), and a second ring groove (34), which receives a second axial bearing ring (35), is formed in the retaining ring (31) on the face side facing toward the second bearing bushing (39),
**in that**, in the retaining ring (31), there is formed at least one bore (61) which connects the first ring groove (32) to a further ring groove (62) formed in the retaining ring (31) in a region facing toward the impeller shaft (13) and/or **in that**, in the retaining ring (31), there is formed at least one bore (63) which connects the second ring groove (34) to the ring groove (62) formed in the retaining ring (31) in the region facing toward the impeller shaft (13).

2. Pump arrangement according to Claim 1, **characterized in that** the first bearing sleeve (26) and the first bearing bushing (27) are arranged in an opening (15) of the casing cover (4).

3. Pump arrangement according to Claim 1 or 2, **characterized in that** the first axial bearing ring (33) is clamped in the first ring groove (32) by way of an undular washer (36), and the second axial bearing ring (35) is clamped in the second ring groove (34) by way of an undular washer (37).

4. Pump arrangement according to one of Claims 2 and 3, **characterized in that** the opening (15) in a casing cover (4) of the pump casing (2) has an opening region (28) of increased diameter, in which opening region there is formed an encircling groove (30) which receives a tolerance ring (29), and in which opening region the first bearing bushing (27) is positioned and connected rotationally conjointly to the casing cover (4) by way of the tolerance ring (29).

5. Pump arrangement according to one of Claims 1 to 4, **characterized in that** an opening (51) in a bearing ring carrier (47) has an opening region (52) of increased diameter, in which opening region there is formed an encircling groove (54) which receives a tolerance ring (53), and in which opening region the second bearing bushing (39) is accommodated and connected rotationally conjointly to the bearing ring carrier (47) by way of the tolerance ring (53).

## Revendications

1. Agencement de pompe, en particulier agencement de pompe à accouplement magnétique, comprenant un espace interne (11) formé par un boîtier de pompe (2) de l'agencement de pompe (1), un pot d'entrefer (10) qui étanchéifie hermétiquement une chambre (12) qu'il entoure par rapport à l'espace interne (11) formé par le boîtier de pompe (2), un arbre de rotor (13) supporté au moyen d'un agencement de palier lisse (19) et pouvant être entraîné en rotation autour d'un axe de rotation (A), un rotor (16) disposé à une extrémité de l'arbre de rotor (13), une première douille de palier (26) en liaison avec l'arbre de rotor (13) de manière solidaire en rotation, une deuxième douille de palier (38) en liaison avec l'arbre de rotor (13) de manière solidaire en rotation, un premier coussinet (27) coopérant par le biais d'une surface de palier radiale avec la première douille de palier (26) et connectée de manière solidaire en rotation au boîtier de pompe (2) ou à un composant (41) fixé au boîtier de pompe (2), un deuxième coussinet (39) coopérant par le biais d'une surface de palier radiale avec la deuxième douille de palier (38) et connecté de manière solidaire en rotation au boîtier de pompe (2) ou à un composant (41) fixé au boîtier de pompe (2) et une bague de fixation (31) disposée entre la première et la deuxième douille de palier (38),
**caractérisé en ce que**
dans la bague de fixation (31), au niveau du côté frontal tourné vers le premier coussinet (27), est réalisée une première rainure annulaire (32) recevant une première bague de palier axiale (33) et au niveau du côté frontal tourné vers le deuxième coussinet (39), est réalisée une deuxième rainure annulaire (34) recevant une deuxième bague de palier axiale (35),
**en ce qu'**au moins un alésage (61) est réalisé dans la bague de fixation (31), lequel relie la première rainure annulaire (32) à une rainure annulaire supplémentaire (62) réalisée dans une région dans la bague de fixation (31) tournée vers l'arbre de rotor (13) et/ou **en ce qu'**au moins un alésage (63) est réalisé dans la bague de fixation (31), lequel relie la deuxième rainure annulaire (34) à la rainure annulaire (62) réalisée dans la région dans la bague de fixation (31) tournée vers l'arbre de rotor (13).

2. Agencement de pompe selon la revendication 1, **caractérisé en ce que** la première douille de palier (26) et le premier coussinet (27) sont disposés dans une ouverture (15) du couvercle de boîtier (4).

3. Agencement de pompe selon la revendication 1 ou 2, **caractérisé en ce que** la première bague de palier axiale (33) est serrée au moyen d'un ressort ondulé (36) dans la première rainure annulaire (32) et la deuxième bague de palier axiale (35) est serrée au moyen d'un ressort ondulé (37) dans la deuxième rainure annulaire (34).

4. Agencement de pompe selon l'une quelconque des revendications 2 ou 3, **caractérisé en ce que** l'ouverture (15), dans un couvercle de boîtier (4) du boîtier de pompe (2), présente une région d'ouverture (28) de plus grand diamètre, dans laquelle est réalisée une rainure périphérique (30) recevant une bague de tolérance (29) et dans laquelle est placé le premier coussinet (27) qui est connecté au couvercle de boîtier (4) de manière solidaire en rotation au moyen de la bague de tolérance (29).

5. Agencement de pompe selon l'une quelconque des revendications 1 à 4, **caractérisé en ce qu'**une ouverture (51) dans un support de bague de palier (47) présente une région d'ouverture (52) de plus grand diamètre, dans laquelle est réalisée une rainure périphérique (54) recevant une bague de tolérance (53) et dans laquelle le deuxième coussinet (39) est monté et est connecté de manière solidaire en rotation au support de bague de palier (47) au moyen de la bague de tolérance (53).
